(19) Europäisches Patentamt
European Patent Office
Office européen des brevets

(11) EP 2 008 809 B1

(12) **EUROPEAN PATENT SPECIFICATION**

(45) Date of publication and mention
of the grant of the patent:
**25.12.2013 Bulletin 2013/52**

(51) Int Cl.:
**B32B 25/08** (2006.01)　　**B60C 5/14** (2006.01)

(21) Application number: **07742119.6**

(22) Date of filing: **16.04.2007**

(86) International application number:
**PCT/JP2007/058684**

(87) International publication number:
**WO 2007/123220 (01.11.2007 Gazette 2007/44)**

(54) **LAYERED LOW-PERMEABILITY RUBBER PRODUCT AND PNEUMATIC TIRE COMPRISING THE SAME**

MEHRLAGIGES KAUTSCHUKPRODUKT MIT GERINGER DURCHLÄSSIGKEIT UND DIESES UMFASSENDER LUFTREIFEN

CAOUTCHOUC EN COUCHES DE FAIBLE PERMÉABILITÉ ET PNEUMATIQUE COMPRENANT LEDIT CAOUTCHOUC

(84) Designated Contracting States:
**DE FR IT**

(30) Priority: **18.04.2006　JP 2006114815**

(43) Date of publication of application:
**31.12.2008　Bulletin 2009/01**

(73) Proprietor: **The Yokohama Rubber Co., Ltd.
Minato-ku
Tokyo 105-8685 (JP)**

(72) Inventor: **MOROOKA, Naoyuki
Hiratsuka-shi, Kanagawa 254-8601 (JP)**

(74) Representative: **HOFFMANN EITLE
Patent- und Rechtsanwälte
Arabellastrasse 4
81925 München (DE)**

(56) References cited:
**WO-A1-2007/037541　　JP-A- 07 308 984
JP-A- 10 016 082　　　JP-A- 10 264 607
JP-A- 2004 262 183　　JP-A- 2005 238 654
JP-A- 2005 343 217　　JP-A- 2005 343 218
JP-A- 2006 256 557　　JP-A- 2006 256 558**

**Description**

TECHNICAL FIELD

The present invention relates to a laminate of a low permeability resin layer and a rubber layer and a pneumatic tire using the same, more specifically relates to a low permeability rubber laminate capable of effectively suppressing the blistering of a low permeability resin and having a superior air pressure retention performance and a pneumatic tire using the same.

BACKGROUND ART

Lamination of a low air permeability resin with a rubber for use as, for example, an air permeation preventive layer (or an inner liner) is known (e.g., see Japanese Patent Publication (A) No. 1-314164). In this case, there is a problem in that the air contained in the rubber layer and the gas generated due to the vulcanization reaction increase the pressure of the gas in the rubber layer and, if the rubber and the low permeability resin laminated therewith have low Young's modulus and strength, a negative pressure is applied to the layer when the pressure is released after the vulcanization, whereby blisters (i.e., destruction of the layer) occurs, the sufficient performance, as an air permeation preventive layer, cannot be exhibited and also the appearance becomes poor.

DISCLOSURE OF THE INVENTION

Accordingly, an object of the present invention is to provide a low permeability rubber laminate capable of effectively suppressing blisters of a low permeability resin layer and exhibiting superior air pressure retention performance, when a low permeability rubber laminate obtained by laminating a low permeability resin layer with at least one rubber layer is used as an air permeation preventive layer of a pneumatic tire.

In accordance with the present invention, there are provided a low permeability rubber laminate comprising (A) at least one pricked low permeability resin layer having an average thickness d of $0.05\ \mu m < d < 10\ \mu m$ provided with a plurality of holes (pricking holes) and, (B) at least one layer of a rubber layer, wherein the low permeability resin having an air permeation coefficient, determined according to JIS K7126 of $0.5 \times 10^{-12}$ cc-cm/cm$^2$·sec·cmHg or less, as well as a pneumatic tire using the same as, for example, an air permeation preventive layer.

According to the present invention, there are further provided the low permeability rubber laminate comprising a pricked low permeability resin layer (A) and a rubber layer (B) between which an adhesive layer (C) is interposed and a pneumatic tire using the same as, for example, an air permeation preventive layer. It is not particularly limited where the laminate comprising the pricked low permeability resin layer and at least one rubber layer is used in the tire.

According to the present invention, by pricking (or prick processing) the low permeability resin layer (A) of the laminate, a plurality of pricked holes are provided, the blisters of the low permeability resin layer (A) can be effectively suppressed and a superior air pressure retention performance can be achieved.

BEST MODE FOR CARRYING OUT THE INVENTION

The inventors engaged in research to solve the above problems and, as a result, found that, by using a low permeability resin layer (A) obtained by pricking a low permeability resin layer (A) to form a specific amount of holes, it is possible to effectively suppress the above problem of blisters and by using the same as, for example, an inner liner of a pneumatic tire, it is possible to achieve superior air pressure retention performance. Further, according to the present invention, it is also possible to impart the minimum limit of bondability (or adhesion properties) to the rubber layer (B) and the low permeability resin layer (A), and, therefore, the worst case situations such as the detachment of the inner liner can be prevented, even when dynamic repeated strain is received during tire use.

The resins usable as the low permeability resin layer (A) in the present invention, are those having an air permeation coefficient, determined according to JIS K7126 at 30°C, of $0.5 \times 10^{-12}$ cc.cm/cm$^2$·sec·CmHg or less, preferably $0.2 \times 10^{-12}$ cc·cm/cm$^2$·sec·cmHg or less. As such resins, polyolefin ketones (POK), polyvinyl alcohols (PVA), ethylene-vinyl alcohols (EVOH), Nylon MXD6, polyvinylidene chloride, polyacrylonitrile (PAN), etc., which are used alone or any blends thereof, may be mentioned. Among these, from the viewpoint of the balance of the gas barrier property and flexibility and the melt formability, ethylene-vinyl alcohol copolymers are preferable. Among the ethylene-vinyl alcohol copolymers, those having an ethylene ratio of 50 mol% or less, further preferably 50 to 20 mol%, and a degree of saponification of 90% or more is more preferable from the viewpoint of the heat resistance (or melting point) and gas barrier property.

If the air permeation coefficient of these resins is too large, the desired air permeation preventive performance cannot be achieved, and therefore, this is not preferable. Further, the thickness of layer of the low permeability resin layer (A) is 0.5 $\mu$m < d < 10 $\mu$m, preferably 1 $\mu$m < d < 3 $\mu$m. If this thickness is too thin, the desired air permeation preventive performance cannot be achieved, and, therefore, this is not preferable. On the contrary, if the thickness is too thick, cracks and consequentially peeling will occur, and, therefore, this is not preferable.

According to the present invention, the low permeability resin layer (A) is pricked to provide a plurality of holes. The pricked holes (or through-holes) provided in the low permeability resin layer (A) have a surface area ratio of 0.01 to 40%, preferably 0.01 to 20%, most preferably 0.1 to 5%. If the ratio of the pricked holes is small, blisters from the layer (A) when pressure is released after the vulcanization of tire is liable to occur, and, therefore, this is not preferable. On the contrary, if the ratio too high, the desired air permeation preventive performance is liable to not be able to be achieved, and, therefore, this is not preferable.

According to the present invention, the method for providing the pricked holes in the low air permeability resin layer (A) is not particularly limited. General methods such as needling, a punching machine, etc. may be used. The size of the pricked holes is also not particularly limited, but in appearance, it is preferable to keep them at a size of not more than 1 mm$^2$.

In the low permeability rubber laminate according to the present invention, as the at least one rubber layer laminated with the resin layer (A), natural rubbers (NR), isoprene rubbers (IR), butadiene rubbers (BR), halogenated butyl rubbers (X-IIR), ethylene propylene rubbers (EPM, EPDM), styrene-based elastomers (SBR, SBS), etc. may be exemplified, which may be used alone or any blends thereof. In a preferable aspect, a three-layer structure comprising the resin layer (A) sandwiched with rubber layers may be mentioned, but the invention is not limited thereto.

The method for laminating the resin layer (A) and the rubber layer is not particularly limited and may be performed by a conventional method. As a specific method, the following method can be exemplified. A laminate film comprising two layers of a thermoplastic resin  composition in a quasi-bonded state with the low permeability resin (A) and the low permeability resin (A) is prepared, then this laminate film is pricked by needling etc. Then, the pricked laminate film and a rubber composition are laminated in the sequence of the thermoplastic resin/the low permeability resin (A)/the rubber composition and vulcanized. The thermoplastic resin composition can then be peeled off to obtain a pricked low permeability rubber laminate of the low permeability resin (A) and the rubber composition. In a preferable embodiment, a conventional adhesive layer (C) is interposed between the resin layer (A) and the rubber layer (B). As long as the applied adhesive composition can laminate the resin and the rubber, it is not particularly limited, but those composed of, for example, epoxide group-containing styrene-based elastomers in which a desired adhesive and vulcanizer/vulcanization accelerator and the like are formulated may be used.

The resin composition and the rubber composition according to the present invention may further include, in addition to the above-mentioned ingredients, any additives conventionally used for these compositions, for example, other fillers such as carbon black or silica, vulcanization or cross-linking agents, vulcanization or cross-linking accelerators, various types of oils, antioxidants, plasticizers, or other conventional additives. These additives may be mixed by a general method to obtain a composition for use for vulcanization or cross-linking. The amounts of these additives may be made the conventional general amounts so long as the object of the present invention is not adversely affected.

EXAMPLES

Examples will now be used to further explain the present invention, but the scope of the present invention is by no means limited to these Examples.

Examples 1 to 6 and Comparative Examples 1 to 3

Preparation of Laminate

A three-layer dies-equipped inflation molding machine was used to prepare a three-layer cylindrical film of a thermoplastic resin in a quasi-bonded state with the low permeability resin (A)/low permeability resin (A)/binder. Then, the film was pricked by needling and laminated in the sequence of the thermoplastic resin/the low permeability resin (A) /the adhesive/the rubber composition. This was used in place of the tire inner liner rubber (i.e., the thermoplastic resin was made to become the tire innermost surface). After vulcanization, the thermoplastic resin was peeled off to prepare a tire with a pricked low permeability resin (A) provided at the tire innermost surface.

Note that, Comparative Example 1 and Comparative Example 3 had not been pricked, and, therefore, broken down from the blistered parts of the low permeability resin layers (A) after indoor tire tests and the appearance become poor. Comparative Example 2 was too thick at the layer (A), and, therefore, there were cracks and peeling in the layer (A) after an indoor tire test resulting in the poor appearance. Table I shows the thermoplastic resins used in the present invention.

Table I: Thermoplastic Resin

|  | Type of polymer | Parts by weight |
|---|---|---|
| PA11 | Polyamide 11 | 50 |
| Mah-EB | Maleic acid-modified ethylene butane copolymer | 50 |
| *1: Rilsan B BESN O TL made by Arkema<br>*2: TAFMER MA8510 made by Mitsui Chemicals | | |

The following tests were performed using the laminates obtained above. The results are shown in Table IV.

Air Leakage

165SR13 steel radial tires (rim 13x4 1/2-J) were allowed to stand under conditions of an initial pressure of 200 kPa and no-load at room temperature of 21°C for three months. The pressure was measured at each measurement interval of four days. This was regressed to a function of the measurement pressure $P_t$, initial pressure $P_o$, and days elapsed t

$$P_t/P_o = \exp(-\alpha t)$$

to find an $\alpha$ value. The obtained $\alpha$ was used and t=30 was entered into the following equation:

$$\beta = [1 - \exp(-\alpha t)] \times 100$$

to obtain a P value. This P value was used as the rate of decrease in pressure per month (air leakage ratio) (%/moth).

Air Leakage Judgment Criteria

Good: Air leakage < 2.5%/month
Fair: 2.5%/month < air leakage < 4.0%/month
Poor: Air leakage > 4.0%/month

Indoor Tire Evaluation

The prepared 165SR13 steel radial tires (rim 13x4 1/2-J) were mounted on a 1500 cc class passenger car with an air pressure of 200 kPa, given a load equivalent to that, when carrying four passengers (65 kg/passenger), and run on an actual road for 20,000 km. After driving, the tires were removed from the rims and the layers (A) at the insides of the tires were visually examined. Tires with cracks in the layer (A) and tires with peeling or blistering of the layer (A) were judged as failing, while those without them were judged as passing.

Judgment Method

Good: Case where the (A) layer does not exhibit any cracks and peeling
Poor: Case where (A) layer exhibits cracks and peeling

Tables II, III, and IV respectively show the low permeability resin (A) used in the present invention, the formulation for the rubber composition laminated to the low permeability resin (A), and the formulation for the binder, and Table V shows Examples and Comparative Examples.

Table II

| Low air permeability resin (A) | Product name | Manufacturer | Air permeation coefficient [cc·cm/cm$^2$·sec·cmHg] |
|---|---|---|---|
| EVOH | EvalL171B | Kuraray | $0.01 \times 10^{-12}$ |
| EVOH | Soarnol V2603 | Nippon Gohsei | $0.008 \times 10^{-12}$ |

Air Permeation Coefficient Measurement Method (Gas Transmission Test Method)

Measurements were conducted according to JIS K7126, "Plastics - Film and Sheeting - Determination of Gas Permeation Rate". The test is a method of measuring the permeation rate of all gases within the scope of the specifications of the used testing equipment. One side (i.e., the low pressure side) separated by a test piece is kept as a vacuum, and the test gas fed into the other side (i.e., the high pressure side). The pressure increase in the low pressure side is used to find the value by the method A (differential pressure method) for finding the gas permeation rate. Here, the gas permeation coefficient is calculated from the gas permeation rate.

Test piece: Film prepared from the resin of Table 2
Test gas: Air (N2:O2=8:2)
Test temperature: 30°C

Table III

| Rubber composition formulation | Parts by weight |
|---|---|
| Natural rubber[*1] | 50 |
| SBR [*2] | 50 |
| Oil[*3] | 5 |
| Sulfur[*4] | 2 |
| Vulcanization accelerator[*5] | 1 |
| Stearic acid[*6] | 0.75 |
| Zinc oxide[*7] | 3 |
| Carbon black[*8] | 50 |
| *1: PT NUSIRA SIR20<br>*2: Tufdene 1000R made by Asahi Kasei Chemicals<br>*3: Extract No. 4S made by Showa Shell Sekiyu<br>*4: Crystex HS oH 20 made by Akzo Nobel<br>*5: Nocceler CZ-G made by Ouchi Shinko Chemical Industry<br>*6: Stearic acid made by BF GOODRICH<br>*7: Zinc Oxide Type 3 made by Seido Chemical Industry<br>*8: HTC#G made by Nippon Steel Chemical Carbon | |

Table IV

| Adhesive Component | Parts by weight |
|---|---|
| ESBS[*1] | 100 |
| Tackifier[*2] | 30 |
| Stearic acid[*3] | 1 |
| Peroxide[*4] | 2 |

(continued)

| Adhesive Component | Parts by weight |
|---|---|
| Zinc oxide[5] | 0.5 |

*1: Epofriend AT501 made by Daicel Chemical Industries
*2: YS resin made by Yasuhara Chemical
*3: Stearic acid made by BF GOODRICH
*4: Parkadox 14/40 made by Kayaku Akzo
*5: Zinc Oxide Type 3 made by Seido Chemical Industry

Table V

| | Comp. Ex. 1 | Example 1 | Example 2 | Comp. Ex. 2 | Comp. Ex. 3 | Example 3 | Example 4 | Example 5 | Example 6 |
|---|---|---|---|---|---|---|---|---|---|
| Low permeability resin (A) | L171B | L171B | L171B | L171B | V2603 | V2603 | V2603 | V2603 | V2603 |
| Pricking | No | Yes | Yes | Yes | No | Yes | Yes | Yes | Yes |
| Pricked surface ratio (%) | 0 | 1 | 3 | 1 | 0 | 1 | 0.08 | 0.5 | 32 |
| Blisters (BL) | Many BL | None | None | None | Many BL | None | None | None | None |
| Layer (A) gauge ($\mu$m) | 2 | 2 | 2 | 12 | 2 | 2 | 2 | 2 | 2 |
| Tire air leakage rate [%/month] | 0.70 | 0.73 | 0.81 | 0.24 | 0.64 | 0.69 | 0.18 | 0.19 | 1.4 |
| Indoor durability evaluation | Defects from BL part | Defect | Defects | Layer (A) crack and (A)/rubber peeling | Defects from BL part | Defect | Defects | Defects | Defects |
| Judgment | Poor | Good | Good | Poor | Poor | Good | Good | Good | Good |

INDUSTRIAL APPLICABILITY

The present invention is able to effectively suppress blisters of the low permeability resin layer of a low permeability rubber laminate comprising a low permeability resin layer and a rubber layer and provides superior air pressure retention performance, and, therefore, may be used as the inner liner of a pneumatic tire and other tire parts (e.g., side parts) and further low permeable hoses etc.

**Claims**

1. A low permeability rubber laminate comprising (A) at least one pricked low permeability resin layer, having an average thickness d of 0.05 $\mu$m < d < 10 $\mu$m, provided with a plurality of pricked holes at a surface area ratio of 0.01 to 40 % of the pricked low permeability resin layer and (B) at least one rubber layer, said low permeability resin having an air permeation coefficient, determined according to JIS K7126, of $0.5 \times 10^{-12}$ cc·cm/cm$^2$·sec·cmHg or less.

2. A low permeability rubber laminate as claimed in claim 1, wherein an adhesive layer (C) is interposed between the pricked low permeability resin layer (A) and the rubber layer (B).

3. A low permeability rubber laminate as claimed in claim 1 or 2, wherein the low permeability resin layer (A) is a pricked low permeability resin layer having pricked holes at a surface area ratio of 0.01 to 20%.

4. A low permeability rubber laminate as claimed in claim 1 or 2, wherein the low permeability resin layer (A) is a pricked low permeability resin layer having pricked holes at a surface area ratio of 0.1 to 5%.

5. A low permeability rubber laminate as claimed in any one of claims 1 to 4, wherein the low permeability resin of the layer (A) is a vinyl alcohol-based resin or a vinylidene chloride-based resin.

6. A low permeability rubber laminate as claimed in any one of claims 1 to 5, wherein the low permeability resin of layer (A) is an ethylene vinyl alcohol copolymer having an ethylene ratio of 50 to 20 mol% and a saponification degree of 90% or more.

7. A pneumatic tire using a low permeability rubber laminate according to any one of claims 1 to 6.

8. A pneumatic tire using a low permeability rubber laminate according to any one of claims 1 to 6 for an inner liner.

**Patentansprüche**

1. Kautschuklaminat mit niedriger Permeabilität, das (A) mindestens eine perforierte Harzschicht niederer Permeabilität, die eine mittlere Dicke d von 0,05 $\mu$m < d < 10 $\mu$m aufweist und mit einer Mehrzahl von Perforationslöchern mit einem Oberflächenverhältnis von 0,01 bis 40 % der perforierten Harzschicht niederer Permeabilität versehen ist, und (B) mindestens eine Kautschukschicht umfasst, worin das Harz niederer Permeabilität einen Luftpermeationskoeffizienten, bestimmt gemäß JIS K7126, von $0,5 \times 10^{-12}$ cc·cm/cm$^2$·Sekunden·cmHg oder weniger aufweist.

2. Kautschuklaminat mit niedriger Permeabilität gemäß Anspruch 1, worin eine Haftschicht (C) zwischen der perforierten Harzschichte niederer Permeabilität (A) und der Kautschukschicht (B) eingebracht ist.

3. Kautschuklaminat mit niedriger Permeabilität gemäß Anspruch 1 oder 2, worin die Harzschicht niederer Permeabilität (A) eine perforierte Harzschicht niederer Permeabilität ist, die Perforationslöcher mit einem Oberflächenverhältnis von 0,01 bis 20 % aufweist.

4. Kautschuklaminat mit niedriger Permeabilität gemäß Anspruch 1 oder 2, worin die Harzschicht niederer Permeabilität (A) eine perforierte Harzschicht niederer Permeabilität ist, die Perforationslöcher mit einem Oberflächenverhältnis von 0,01 bis 5 % aufweist.

5. Kautschuklaminat mit niedriger Permeabilität gemäß irgendeinem der Ansprüche 1 bis 4, worin das Harz niederer Permeabilität der Schicht (A) ein Harz auf Vinylalkoholbasis oder ein Harz auf Vinylidenchloridbasis ist.

**6.** Kautschuklaminat mit niedriger Permeabilität gemäß irgendeinem der Ansprüche 1 bis 5, worin das Harz niederer Permeabilität der Schicht (A) ein Ethylenvinylalkohol-Copolymer ist, das ein Ethylenverhältnis von 50 bis 20 Mol% und einen Verseifungsgrad von 90 % oder mehr aufweist.

**7.** Luftreifen, der ein Kautschuklaminat mit niedriger Permeabilität gemäß irgendeinem der Ansprüche 1 bis 6 einsetzt.

**8.** Luftreifen, der ein Kautschuklaminat mit niedriger Permeabilität gemäß irgendeinem der Ansprüche 1 bis 6 für eine innere Auskleidung einsetzt.

**Revendications**

**1.** Laminé de caoutchouc de faible perméabilité comprenant (A) au moins une couche de résine piquée de faible perméabilité, d'une épaisseur moyenne d de 0,05 $\mu$m < d < 10 $\mu$m, pourvue d'une pluralité de trous piqués selon un rapport d'aire de surface de 0,01 à 40 % de la couche de résine piquée de faible perméabilité, et (B) au moins une couche de caoutchouc, ladite résine de faible perméabilité ayant un coefficient de perméation d'air, déterminé en accord avec JIS K7126, de 0,5x10$^{-12}$ cc·cm/cm$^2$·sec·cmHg ou moins.

**2.** Laminé de caoutchouc de faible perméabilité selon la revendication 1, dans lequel une couche adhésive © est interposée entre la couche de résine piquée de faible perméabilité (A) et la couche de caoutchouc (B).

**3.** Laminé de caoutchouc de faible perméabilité selon la revendication 1 ou 2, dans lequel la couche de résine de faible perméabilité (A) est une couche de résine piquée de faible perméabilité ayant des trous piqués selon un rapport d'aire de surface de 0,01 à 20 %.

**4.** Laminé de caoutchouc de faible perméabilité selon la revendication 1 ou 2, dans lequel la couche de résine de faible perméabilité (A) est une couche de résine piquée de faible perméabilité ayant des trous piqués selon un rapport d'aire de surface de 0,1 à 5 %.

**5.** Laminé de caoutchouc de faible perméabilité selon l'une quelconque des revendications 1 à 4, dans lequel la résine de faible perméabilité de la couche (A) est une résine à base d'alcool vinylique ou une résine à base de vinylidène chlorure.

**6.** Laminé de caoutchouc de faible perméabilité selon l'une quelconque des revendications 1 à 5, dans lequel la résine de faible perméabilité de la couche (A) est un copolymère d'éthylène alcool vinylique ayant un taux d'éthylène de 50 à 20 mol% et un degré de saponification de 90% ou plus.

**7.** Bandage pneumatique utilisant un laminé de caoutchouc de faible perméabilité selon l'une quelconque des revendications 1 à 6.

**8.** Bandage pneumatique utilisant un laminé de caoutchouc de faible perméabilité selon l'une quelconque des revendications 1 à 6 pour un calandrage intérieur.

**REFERENCES CITED IN THE DESCRIPTION**

**Patent documents cited in the description**

- JP 1314164 A